# EUROPEAN PATENT APPLICATION

(11) **EP 4 847 426 A1**
(43) Date of publication of application: **02.12.2026**
(21) Application number: 24921763.9
(22) Date of filing: 16.12.2024
(51) Int. Cl.: B65G 67/24

(54) **CONTAINER TRAIN LOADING AND UNLOADING SYSTEM AND METHOD**

(30) Priority: 02.02.2024 CN 202410151708
(71) Applicant: Wang, Huan, Changchun, Jilin 130051 (CN)
(72) Inventor: Wang, Huan, Changchun, Jilin 130051 (CN)
(74) Representative: Bayramoglu et al.
(86) International application number: PCT/CN2024/139688
(87) International publication number: WO 2025/161741

(57) **Abstract**

A container train loading and unloading system and method. The system comprises: a loading and unloading support, an electric catenary (3), an electric catenary translation mechanism (4), and a row of bridge cranes (5), wherein the electric catenary (3), the electric catenary translation mechanism (4) and the row of bridge cranes (5) are arranged on the loading and unloading support; the electric catenary translation mechanism (4) is fixed on the loading and unloading support, and the electric catenary translation mechanism (4) is arranged above a container train at a distance meeting a preset threshold; the electric catenary (3) is slidably connected to the electric catenary translation mechanism (4); and the row of bridge cranes (5) is arranged on the top of the loading and unloading support and is slidably connected to a steel frame at the top. Therefore, the system and method can avoid interference with an electric catenary of a railway, directly carry out loading and unloading above a standard container train, and simultaneously load and unload all containers on the standard container train, thus achieving rapid loading and unloading of railway containers and improving loading and unloading efficiency and coordination.

## Description

### TECHNICAL FIELD

The present disclosure relates to the technical field of container loading and unloading control, and in particular to a container train loading and unloading system and method.

### BACKGROUND

Currently, the volume of railway container transportation is low. In one aspect, railway container transportation takes a long time. In traditional railway container transportation, railway freight trains need to undergo breaking-up operations at the marshalling yards they pass through; that is, after being broken up, the freight trains are remarshalled with freight trains bound for the same destination. Due to the long waiting time for marshalling, the railway transportation is slow, and the turnover of railway freight trains is slow. In another aspect, the loading and unloading speed of railway containers is slow.

At present, the railway container loading and unloading equipment mainly includes rail-mounted gantry cranes, reach stackers, and the like. A rail-mounted gantry crane needs to load and unload containers one by one, and the overhead contact system of the electrified railway may affect the hoisting of the containers. Using the existing railway container loading and unloading equipment to load and unload containers requires the railway freight train to be uncoupled, transferred, and shunted to a station without an overhead contact system to realize the loading and unloading of the containers, which is inefficient. In addition, the gauges of different railways may be different. Especially in cross-border transportation, all containers need to be hoisted between trains on different tracks, resulting in poor collaboration.

### SUMMARY

Embodiments of the present disclosure provide a container train loading and unloading system and method. In order to facilitate a basic understanding of some aspects of the disclosed embodiments, a brief summary is given below. This summary is not a general overview, nor is it intended to identify key/important constituent elements or to delineate the scope of protection of these embodiments. Its sole purpose is to present some concepts in a simple form as a prelude to the detailed description that follows.

In a first aspect, the embodiments of the present disclosure provide a container train loading and unloading system. The system is disposed in a railway container loading and unloading area, a container stacking area, and a container truck loading and unloading area, the railway container loading and unloading area, the container stacking area, and the container truck loading and unloading area are sequentially arranged along a lateral side of a railway, and the system includes: a loading and unloading support, an overhead contact system, an overhead contact system translation mechanism, and a row of bridge cranes;
the loading and unloading support is disposed in the railway container loading and unloading area, the container stacking area, and the container truck loading and unloading area, and the overhead contact system, the overhead contact system translation mechanism, and the row of bridge cranes are disposed on the loading and unloading support;
the overhead contact system translation mechanism is fixed on the loading and unloading support, the overhead contact system translation mechanism is disposed above a container train, a distance between the overhead contact system translation mechanism and the container train satisfies a preset threshold, the overhead contact system and the overhead contact system translation mechanism are slidably connected, and the row of bridge cranes is disposed at a top of the loading and unloading support and slidably connected to a steel frame at the top.

Optionally, the overhead contact system is configured to provide power for the container train;
the overhead contact system translation mechanism is configured to drive the overhead contact system to translate the overhead contact system between an upper side and a lateral side of the container train;
the row of bridge cranes is disposed in the railway container loading and unloading area, the container stacking area, and the container truck loading and unloading area;
the row of bridge cranes is composed of a plurality of bridge cranes arranged in a row along the railway, each bridge crane operates independently according to loading and unloading tasks, and the row of bridge cranes is configured to load, unload, and transfer containers between the railway container loading and unloading area, the container stacking area, and the container truck loading and unloading area.

Optionally, the overhead contact system includes messenger wires, droppers, and contact wires;
the messenger wire is suspended from an output end of the overhead contact system translation mechanism;
the dropper is configured to adjust a height between the contact wire and a rail surface, and the contact wire is suspended from the messenger wire via the dropper.

Optionally, an output end of the overhead contact system translation mechanism is laterally telescopic.

Optionally, the container train is configured to carry containers;
a length of each car of the container train is the same, such that each crane of the row of bridge cranes is capable of aligning with each car of a standard container train simultaneously.

Optionally, the system further includes an upper computer;
the upper computer is in communication connection with the overhead contact system and the row of bridge cranes;
the upper computer is configured to: control the overhead contact system to provide power for the container train and translate between an upper side and a lateral side of the container train, and the upper computer is further configured to control the row of bridge cranes to load, unload, and transfer containers between the railway container loading and unloading area, the container stacking area, and the container truck loading and unloading area.

Optionally, the row of bridge cranes includes spreaders;
the spreader is configured to acquire container data and sensor data of a container and send the container data and the sensor data to an upper computer.

Optionally, the spreader includes a mechanical box, a plurality of hooks disposed on the mechanical box, an acquisition component, and a control component;
the acquisition component includes a container data acquisition part and a sensor data acquisition part, the container data acquisition part is disposed on the mechanical box and configured to acquire a material picture of a container to be loaded or unloaded and send the material picture to the upper computer, and the sensor data acquisition part is disposed on the hook;
the control component is configured to receive and send information acquired by the acquisition component and control the hook of the mechanical box to operate.

Optionally, the container data acquisition part includes a millimeter-wave radar and a camera device;
the millimeter-wave radar and the camera device are disposed at a bottom of the mechanical box;
the millimeter-wave radar and the camera device are configured to acquire material data of the container to be loaded or unloaded;
the sensor data acquisition part includes an angle sensor and a pressure sensor;
the angle sensor is disposed in the mechanical box and configured to monitor, in real time, an angle of the hook and an angle of the container to be loaded or unloaded and feed back the angles to the control component;
the pressure sensor is mounted on an action surface where the hook abuts against the container to be loaded or unloaded for acquiring pressure data in real time and feeding back the pressure data to the control component.

In a second aspect, the embodiments of the present disclosure provide a container train loading and unloading method. The method includes:
controlling the spreaders of the row of bridge cranes to move to the container truck loading and unloading area and controlling the spreaders of the bridge cranes to hoist the containers, transfer the containers to the container stacking area, and lower the containers onto the container stacking area in the case that container trucks carrying containers are monitored to enter the container truck loading and unloading area;
controlling the overhead contact system translation mechanism to drive the overhead contact system to move to the lateral side of the container train in the case that the container train is monitored to enter the railway container loading and unloading area without load;
controlling the spreaders of the row of bridge cranes to move to the container stacking area;
controlling the spreaders of the bridge cranes to separately hoist the containers to the railway container loading and unloading area and lower the containers onto the standard container train; and
controlling the overhead contact system translation mechanism to drive the overhead contact system to an upper side of the standard container train, to drive the standard container train away from the railway container loading and unloading area.

The technical solutions according to the embodiments of the present disclosure may include the following beneficial effects.
1. According to the rapid standard container train loading and unloading system and method of the present disclosure, the overhead contact system is translated to the lateral side of the standard container train, such that loading and unloading are directly performed by the row of bridge cranes from above the standard container train, thereby avoiding interference of container loading and unloading with the overhead contact system, and the loading and unloading are performed without the need for uncoupling and shunting.
2. According to the rapid standard container train loading and unloading system and method of the present disclosure, each car of the standard container train can align with each bridge crane of the row of bridge cranes simultaneously by adopting the standard container train, such that the row of bridge cranes can load or unload all containers of the entire standard container train simultaneously, thereby achieving the rapid loading and unloading of railway containers.
3. According to the rapid standard container train loading and unloading system and method of the present disclosure, compared with the current rail-mounted gantry crane, the row of bridge cranes has a high utilization rate, and the cost of a single bridge crane is low, such that the loading and unloading cost of containers is reduced.
4. According to the rapid standard container train loading and unloading system and method of the present disclosure, the rapid loading and unloading of railway containers is achieved through the cooperation of the standard container train and the row of bridge cranes. Compared with the current marshalling yard transportation method, the standard container train features fast turnover and a high utilization rate, which reduces the procurement cost of the container train.
5. According to the rapid standard container train loading and unloading system and method of the present disclosure, the length of the standard container train is not limited by the marshalling yard. Taking the marshalling length being 8 times the existing length as an example and with 40 pairs of trains dispatched per day, the freight volume can be increased by 5 times, and the transportation cost is expected to be reduced to less than half.

It should be understood that the foregoing general description and the following detailed description are merely exemplary and explanatory, and are not intended to limit the present disclosure.

### BRIEF DESCRIPTION OF THE DRAWINGS

The accompanying drawings, which are incorporated in and constitute a part of the specification, illustrate embodiments consistent with the present disclosure and, together with the specification, serve to explain the principles of the present disclosure.
FIG. 1 is a front view of a rapid container train loading and unloading system according to an embodiment of the present disclosure;
FIG. 2 is a left view of a rapid container train loading and unloading system according to an embodiment of the present disclosure;
FIG. 3 is a top view of a rapid container train loading and unloading system according to an embodiment of the present disclosure;
FIG. 4 is a schematic flowchart of a container train loading and unloading method according to an embodiment of the present disclosure;
FIG. 5 is a top view of a rapid standard container train loading and unloading system for trains with different track widths according to an embodiment of the present disclosure; and
FIG. 6 is a top view of a rapid standard container train loading and unloading system without an overhead contact system translation mechanism according to an embodiment of the present disclosure.

Reference numerals: 1: container train; 1.1: electric locomotive; 1.2: car; 2: container; 3: overhead contact system; 3.1: messenger wire; 3.2: dropper; 3.3: contact wire; 4: overhead contact system translation mechanism; 5: row of bridge cranes; 5.1: bridge crane; 5.2: crane bridge; 5.3: crane spreader; 5.4: crane support beam; 5.5: crane column; 6: container truck; area A: railway container loading and unloading area; area B: container stacking area; area C: container truck loading and unloading area.

### DETAILED DESCRIPTION OF THE EMBODIMENTS

The following description and the drawings sufficiently illustrate specific implementations of the present disclosure to enable those skilled in the art to practice them.

It should be noted that the described embodiments are merely some but not all of the embodiments of the present disclosure. All other embodiments obtained by those of ordinary skill in the art based on the embodiments of the present disclosure without creative efforts shall fall within the protection scope of the present disclosure.

When the following description relates to the drawings, unless otherwise indicated, the same numbers in different drawings represent the same or similar elements. The implementations described in the following exemplary embodiments do not represent all implementations consistent with the present disclosure. On the contrary, the implementations are merely examples of apparatuses and methods that are described in the appended claims in detail and that are consistent with some aspects of the present disclosure.

In the description of the present disclosure, it should be understood that the terms "first", "second", and the like are used for descriptive purposes only and are not to be construed as indicating or implying relative importance. For those of ordinary skill in the art, the specific meanings of the above terms in the present disclosure can be understood according to specific conditions. In addition, in the description of the present disclosure, "a plurality of" means two or more unless otherwise specified. The term "and/or" describes an associative relationship between associated objects and represents that three relationships may exist. For example, A and/or B may represent the following three cases: Only A exists, both A and B exist, and only B exists. The character "/" generally indicates an "or" relationship between the associated objects before and after the "/".

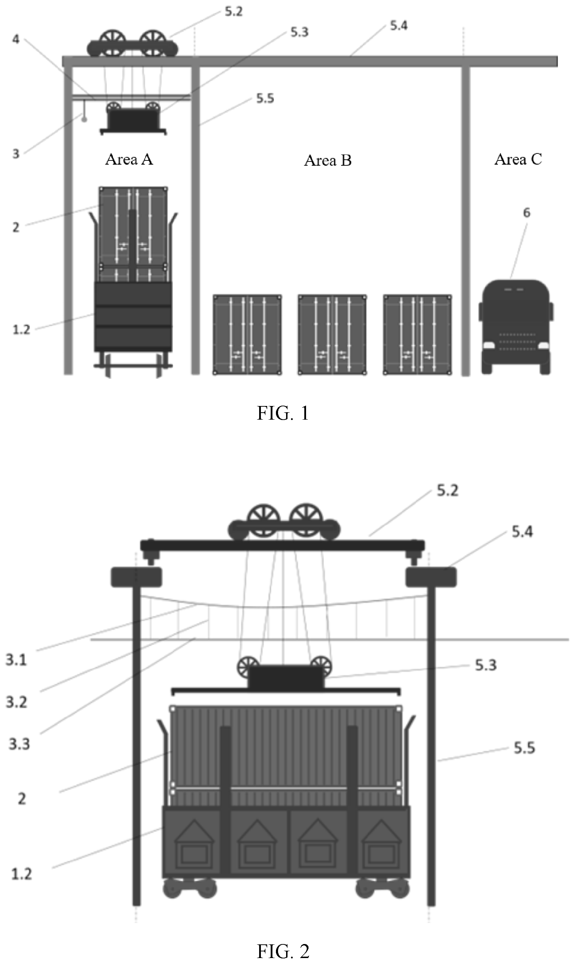

Referring to FIG. 1, a schematic structural diagram of a rapid container train loading and unloading system is provided according to an embodiment of the present disclosure. As shown in FIG. 1, the system is disposed in a railway container loading and unloading area, a container stacking area, and a container truck loading and unloading area, the railway container loading and unloading area, the container stacking area, and the container truck loading and unloading area are sequentially arranged along a lateral side of a railway, and the system includes: a loading and unloading support, an overhead contact system, an overhead contact system translation mechanism, and a row of bridge cranes. The loading and unloading support is disposed in the railway container loading and unloading area, the container stacking area, and the container truck loading and unloading area, and the overhead contact system, the overhead contact system translation mechanism, and the row of bridge cranes are disposed on the loading and unloading support. The overhead contact system translation mechanism is fixed on the loading and unloading support, the overhead contact system translation mechanism is disposed above a container train, a distance between the overhead contact system translation mechanism and the container train satisfies a preset threshold, the overhead contact system and the overhead contact system translation mechanism are slidably connected, and the row of bridge cranes is disposed at the top of the loading and unloading support and is slidably connected to a steel frame at the top.

In an embodiment, the overhead contact system is configured to provide power for the container train; the overhead contact system translation mechanism is configured to drive the overhead contact system to translate the overhead contact system between an upper side and a lateral side of the container train; the row of bridge cranes is disposed in the railway container loading and unloading area, the container stacking area, and the container truck loading and unloading area. The row of bridge cranes is composed of a plurality of bridge cranes arranged in a row along the railway, each bridge crane operates independently according to loading and unloading tasks, and the row of bridge cranes is configured to load, unload, and transfer containers between the railway container loading and unloading area, the container stacking area, and the container truck loading and unloading area.

In an embodiment, the overhead contact system includes messenger wires, droppers, and contact wires; the messenger wire is suspended from an output end of the overhead contact system translation mechanism; the dropper is configured to adjust a height between the contact wire and a rail surface, and the contact wire is suspended from the messenger wire via the dropper.

In an embodiment, an output end of the overhead contact system translation mechanism is laterally telescopic.

In an embodiment, the container train is configured to carry containers; the length of each car of the container train is the same, such that each crane of the row of bridge cranes is capable of aligning with each car of a standard container train simultaneously.

In an embodiment, the system further includes an upper computer; the upper computer is in communication connection with the overhead contact system and the row of bridge cranes; the upper computer is configured to: control the overhead contact system to provide power for the container train and translate between an upper side and a lateral side of the container train, and the upper computer is further configured to control the row of bridge cranes to load, unload, and transfer containers between the railway container loading and unloading area, the container stacking area, and the container truck loading and unloading area.

In an embodiment, the row of bridge cranes includes spreaders; the spreader is configured to acquire container data and sensor data of a container and send the container data and the sensor data to an upper computer.

In an embodiment, the spreader includes a mechanical box, a plurality of hooks disposed on the mechanical box, an acquisition component, and a control component; the acquisition component includes a container data acquisition part and a sensor data acquisition part, the container data acquisition part is disposed on the mechanical box and configured to acquire a material picture of a container to be loaded or unloaded and send the material picture to the upper computer, and the sensor data acquisition part is disposed on the hook; the control component is configured to receive and send information acquired by the acquisition component and control the hook of the mechanical box to operate.

In an embodiment, the container data acquisition part includes a millimeter-wave radar and a camera device. The millimeter-wave radar and the camera device are disposed at the bottom of the mechanical box; the millimeter-wave radar and the camera device are configured to acquire material data of the container to be loaded or unloaded. The sensor data acquisition part includes an angle sensor and a pressure sensor; the angle sensor is disposed in the mechanical box and is configured to monitor, in real time, the angle of the hook and the angle of the container to be loaded or unloaded and feed back the angles to the control component; the pressure sensor is mounted on an action surface where the hook abuts against the container to be loaded or unloaded for acquiring pressure data in real time and feeding back the pressure data to the control component.

In the embodiments of the present disclosure, a rapid standard container train loading and unloading system is disposed beside a railway line and can directly align with a standard container train for loading and unloading containers. According to the functions of the respective areas where the rapid standard container train loading and unloading system is located, areas where the rapid standard container train loading and unloading system is located may be divided into the following areas: a railway container loading and unloading area, a container stacking area, and a container truck loading and unloading area, as shown in FIG. 1.

The railway container loading and unloading area is a traveling-stopping area for a standard container train, and container loading and unloading can be performed when the standard container train stops in the railway container loading and unloading area. The container stacking area is a temporary stacking area through which containers are transferred to a standard container train or container truck. The container truck loading and unloading area is a traveling area of a container truck, and container loading and unloading can be performed when the container truck stops in the container truck loading and unloading area.

The structure of the rapid standard container train loading and unloading system is as shown in FIGs. 1 to 3, which are schematic diagrams of the rapid standard container train loading and unloading system from different angles. The system includes a standard container train, an overhead contact system, an overhead contact system translation mechanism, and a row of bridge cranes. The standard container train is used for transporting containers, and the overhead contact system is driven by the overhead contact system translation mechanism; the overhead contact system translation mechanism is mounted on a crane support; the row of bridge cranes is composed of several bridge cranes arranged in a row along the railway and is configured to load, unload, and transfer containers between the railway container loading and unloading area, the container stacking area, and the container truck loading and unloading area, and the bridge crane may directly adopt an existing bridge container crane apparatus.

In the embodiments of the present disclosure, in the case that container trucks carrying containers are monitored to enter the container truck loading and unloading area, the spreaders of the row of bridge cranes are controlled to move to the container truck loading and unloading area, and the spreaders of the bridge cranes are controlled to hoist the containers, transfer the containers to the container stacking area, and lower the containers onto the container stacking area; in the case that the container train is monitored to enter the railway container loading and unloading area without load, the overhead contact system translation mechanism is controlled to drive the overhead contact system to move to a lateral side of the container train; the spreaders of the row of bridge cranes are controlled to move to the container stacking area; the spreaders of the bridge cranes are controlled to separately hoist the containers to the railway container loading and unloading area and lower the containers onto the standard container train; the overhead contact system translation mechanism is controlled to drive the overhead contact system to an upper side of the standard container train, to drive the standard container train away from the railway container loading and unloading area. Interference with the overhead contact system of the railway can be avoided. Loading and unloading are directly carried out above the standard container train, and all containers on the standard container train can be loaded or unloaded simultaneously, thus achieving rapid loading and unloading of railway containers and improving loading and unloading efficiency and coordination.

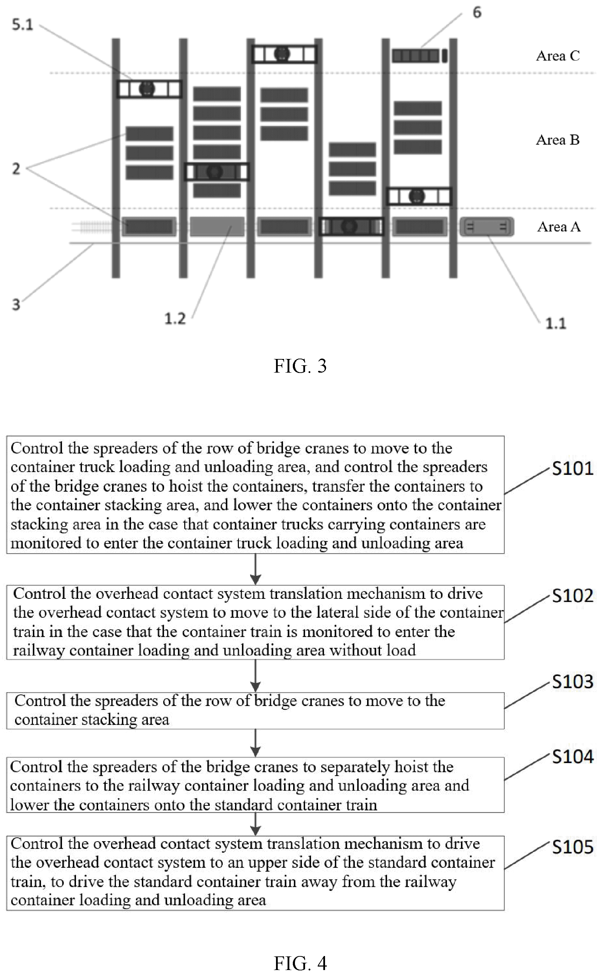

The container train loading and unloading method provided in the embodiments of the present disclosure will be described in detail below with reference to FIG. 4. The method may be implemented by means of a computer program and may be executed on a container train loading and unloading system based on a Von Neumann architecture. The computer program may be integrated into an application, or may be run as an independent tool application.

Referring to FIG. 4, a schematic flowchart of a container train loading and unloading method is provided according to an embodiment of the present disclosure. As shown in FIG. 4, the method in the embodiments of the present disclosure may include the following steps.

In S101, in the case that container trucks carrying containers are monitored to enter the container truck loading and unloading area, the spreaders of the row of bridge cranes are controlled to move to the container truck loading and unloading area, and the spreaders of the bridge cranes are controlled to hoist the containers, transfer the containers to the container stacking area, and lower the containers onto the container stacking area.

In S102, in the case that the container train is monitored to enter the railway container loading and unloading area without load, the overhead contact system translation mechanism is controlled to drive the overhead contact system to move to the lateral side of the container train.

In S103, the spreaders of the row of bridge cranes are controlled to move to the container stacking area.

In S104, the spreaders of the bridge cranes are controlled to hoist the containers to the railway container loading and unloading area and lower the containers onto the standard container train.

In S105, the overhead contact system translation mechanism is controlled to drive the overhead contact system to an upper side of the standard container train, to drive the standard container train away from the railway container loading and unloading area.

In a possible implementation, the overall loading and unloading process is as follows: the standard container train carrying containers enters the railway container loading and unloading area; the overhead contact system translation mechanism drives the overhead contact system to the lateral side of the standard container train; the spreaders of the row of bridge cranes separately travel to the railway container loading and unloading area, and the spreaders of the row of bridge cranes separately hoist containers to be unloaded to the container stacking area; container trucks enter the container truck loading and unloading area; the spreaders of the row of bridge cranes separately travel to the container stacking area, and the spreaders of the row of bridge cranes separately hoist containers to be loaded or unloaded to the container trucks. The container loading process is as follows: container trucks carrying containers enter the container truck loading and unloading area; the spreaders of the row of bridge cranes separately travel to the container truck loading and unloading area, and the spreaders of the row of bridge cranes separately hoist the containers to the container stacking area and lower the containers onto the container stacking area; the standard container train enters the railway container loading and unloading area without load; the overhead contact system translation mechanism drives the overhead contact system to translate to the lateral side of the standard container train; the spreaders of the row of bridge cranes separately travel to the container stacking area, and the spreaders of the row of bridge cranes separately hoist the containers to be loaded to the railway container loading and unloading area and lower the containers onto the standard container train; the overhead contact system translation mechanism drives the overhead contact system to the upper side of the standard container train. The standard container train departs from the railway container loading and unloading area.

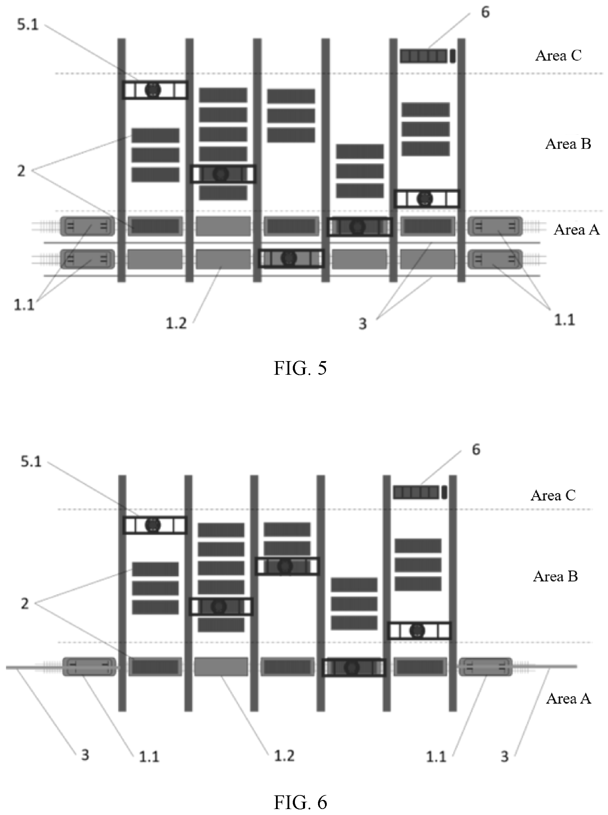

For example, as shown in FIG. 5, a loading and unloading case of a standard container train with different rail widths is provided. The container loading and unloading process is as follows: a standard container train 1 carrying containers enters a railway container loading and unloading area; a standard container train 2 enters the railway container loading and unloading area without load; overhead contact system translation mechanisms above the two trains respectively drive overhead contact systems to translate to lateral sides of the standard container trains; spreaders of a row of bridge cranes separately travel to an upper side of the standard container train 1, and the spreaders of the row of bridge cranes separately hoist containers to be loaded or unloaded to the standard container train 2 and lower the containers onto the standard container train 2; the overhead contact system translation mechanisms above the two trains respectively drive the overhead contact systems to upper sides of the standard container trains. The two standard container trains depart from the railway container loading and unloading area.

For example, as shown in FIG. 6, a loading and unloading case of a standard container train without an overhead contact system translation mechanism is provided. In the embodiments of the present disclosure, a rapid standard container train loading and unloading system is disposed beside a railway line and can directly align with a standard container train for loading and unloading containers. According to the functions of the respective areas where the rapid standard container train loading and unloading system is located, areas where the rapid standard container train loading and unloading system is located may be divided into the following areas: a railway container loading and unloading area, a container stacking area, and a container truck loading and unloading area, as shown in FIG. 1. The railway container loading and unloading area is a traveling-stopping area for a standard container train, and container loading and unloading can be performed when the standard container train stops in the railway container loading and unloading area. The container stacking area is a temporary stacking area through which containers are transferred to a standard container train or container truck. The container truck loading and unloading area is a traveling area of a container truck, and container loading and unloading can be performed when the container truck stops in the container truck loading and unloading area. The structure of the rapid standard container train loading and unloading system is as shown in FIG. 5. The system includes a standard container train, an overhead contact system, and a row of bridge cranes. The standard container train is used for transporting containers, and is provided with electric locomotives at both the front and the rear. The rear electric locomotive has a pantograph for obtaining electric energy when entering a station, and the front electric locomotive has a pantograph for obtaining electric energy when leaving a station The overhead contact system is located above the railway, and there is no overhead contact system in the loading and unloading area; the row of bridge cranes is composed of several bridge cranes arranged in a row along the railway and is configured to load, unload, and transfer containers between the railway container loading and unloading area, the container stacking area, and the container truck loading and unloading area, and the bridge crane may adopt an existing bridge container crane apparatus.

The operating principle of the rapid standard container train loading and unloading system in this embodiment is as follows:
1. Overall loading and unloading process:
   The electric locomotive at the rear of the standard container train raises the pantograph to enable the train carrying containers to enter the railway container loading and unloading area.

The spreaders of the row of bridge cranes separately travel to the railway container loading and unloading area, and the spreaders of the row of bridge cranes separately hoist the container to be unloaded to the container stacking area.

The electric locomotive at the front of the standard container train raises the pantograph to enable the train to leave the railway container loading and unloading area.

Container trucks enter the container truck loading and unloading area.

The spreaders of the row of bridge cranes separately travel to the container stacking area, and the spreaders of the row of bridge cranes separately hoist containers to be loaded or unloaded to the container trucks.

The container loading process is as follows:
Container trucks carrying containers enter the container truck loading and unloading area.

The spreaders of the row of bridge cranes separately travel to the container truck loading and unloading area, and the spreaders of the row of bridge cranes hoist containers to the container stacking area and lower the containers onto the container stacking area separately.

The electric locomotive at the rear of the standard container train raises the pantograph to enable the train to enter the railway container loading and unloading area without load.

The spreaders of the row of bridge cranes separately travel to the container stacking area, and the spreaders of the row of bridge cranes hoist containers to be loaded to the railway container loading and unloading area and lower the containers onto the standard container train separately.

The electric locomotive at the front of the standard container train raises the pantograph to enable the train to leave the railway container loading and unloading area.

In the embodiments of the present disclosure, in the case that container trucks carrying containers are monitored to enter the container truck loading and unloading area, the spreaders of the row of bridge cranes are controlled to move to the container truck loading and unloading area, and the spreaders of the bridge cranes are controlled to hoist the containers, transfer the containers to the container stacking area, and lower the containers onto the container stacking area; in the case that the container train is monitored to enter the railway container loading and unloading area without load, the overhead contact system translation mechanism is controlled to drive the overhead contact system to move to a lateral side of the container train; the spreaders of the row of bridge cranes are controlled to move to the container stacking area; the spreaders of the bridge cranes are controlled to separately hoist the containers to the railway container loading and unloading area and lower the containers onto the standard container train; the overhead contact system translation mechanism is controlled to drive the overhead contact system to an upper side of the standard container train, to drive the standard container train away from the railway container loading and unloading area.

Interference with the overhead contact system of the railway can be avoided. Loading and unloading are directly carried out above the standard container train, and all containers on the standard container train can be loaded or unloaded simultaneously, thus achieving rapid loading and unloading of railway containers and improving loading and unloading efficiency and coordination.

The present disclosure further provides a computer-readable medium having program instructions stored thereon. The program instructions, when executed by a processor, cause the processor to perform the container train loading and unloading method according to the above method embodiments.

The present disclosure further provides a computer program product including instructions. The computer program product, when running on a computer, causes the computer to perform the container train loading and unloading method according to the above method embodiments.

The computer-readable storage medium provided in the above embodiments of the present disclosure shares the same inventive concept as the container train loading and unloading method provided in the embodiments of the present disclosure, and achieves the same beneficial effects as those of the method adopted, executed, or implemented by the application program stored in the computer-readable storage medium.

The foregoing description is merely preferred embodiments of the present disclosure, but is not intended to limit the protection scope of the present disclosure. Any variation or replacement readily figured out by those skilled in the art within the technical scope disclosed in the present disclosure shall fall within the protection scope of the present disclosure. Therefore, the protection scope of the present disclosure shall be subject to the protection scope of the claims.

Those of ordinary skill in the art may understand that all or some of the processes of the methods in the above embodiments may be implemented by a computer program to instruct the relevant hardware. A program for loading and unloading a container train may be stored in a computer-readable storage medium. The program, when run, may include the processes of the methods in the above embodiments. The storage medium may be a magnetic disk, an optical disk, a read-only memory, or a random access memory.

What is disclosed above is merely preferred embodiments of the present disclosure, and certainly is not intended to limit the protection scope of the present disclosure. Therefore, equivalent variations made in accordance with the claims of the present disclosure shall fall within the scope of the present disclosure.

## Claims

1. A container train loading and unloading system, **characterized in that** the system is disposed in a railway container loading and unloading area, a container stacking area, and a container truck loading and unloading area, the railway container loading and unloading area, the container stacking area, and the container truck loading and unloading area are sequentially arranged along a lateral side of a railway, and the system comprises: a loading and unloading support, an overhead contact system, an overhead contact system translation mechanism, and a row of bridge cranes;
the loading and unloading support is disposed in the railway container loading and unloading area, the container stacking area, and the container truck loading and unloading area, and the overhead contact system, the overhead contact system translation mechanism, and the row of bridge cranes are disposed on the loading and unloading support;
the overhead contact system translation mechanism is fixed on the loading and unloading support, the overhead contact system translation mechanism is disposed above a container train, a distance between the overhead contact system translation mechanism and the container train satisfies a preset threshold, the overhead contact system and the overhead contact system translation mechanism are slidably connected, and the row of bridge cranes is disposed at a top of the loading and unloading support and slidably connected to a steel frame at the top.

2. The container train loading and unloading system according to claim 1, **characterized in that**
the overhead contact system is configured to provide power for the container train;
the overhead contact system translation mechanism is configured to drive the overhead contact system to translate the overhead contact system between an upper side and a lateral side of the container train;
the row of bridge cranes is disposed in the railway container loading and unloading area, the container stacking area, and the container truck loading and unloading area;
the row of bridge cranes is composed of a plurality of bridge cranes arranged in a row along the railway, each bridge crane operates independently according to loading and unloading tasks, and the row of bridge cranes is configured to load, unload, and transfer containers between the railway container loading and unloading area, the container stacking area, and the container truck loading and unloading area.

3. The container train loading and unloading system according to claim 1, **characterized in that**
the overhead contact system comprises messenger wires, droppers, and contact wires;
the messenger wire is suspended from an output end of the overhead contact system translation mechanism;
the dropper is configured to adjust a height between the contact wire and a rail surface, and the contact wire is suspended from the messenger wire via the dropper.

4. The container train loading and unloading system according to claim 1, **characterized in that**
an output end of the overhead contact system translation mechanism is laterally telescopic.

5. The container train loading and unloading system according to claim 1, **characterized in that**
the container train is configured to carry containers;
a length of each car of the container train is the same, such that each crane of the row of bridge cranes is capable of aligning with each car of a standard container train simultaneously.

6. The container train loading and unloading system according to claim 1, **characterized in that**
the system further comprises an upper computer;
the upper computer is in communication connection with the overhead contact system and the row of bridge cranes;
the upper computer is configured to: control the overhead contact system to provide power for the container train and translate between an upper side and a lateral side of the container train, and the upper computer is further configured to control the row of bridge cranes to load, unload, and transfer containers between the railway container loading and unloading area, the container stacking area, and the container truck loading and unloading area.

7. The container train loading and unloading system according to claim 1, **characterized in that**
the row of bridge cranes comprises spreaders;
the spreader is configured to acquire container data and sensor data of a container and send the container data and the sensor data to an upper computer.

8. The container train loading and unloading system according to claim 7, **characterized in that**
the spreader comprises a mechanical box, a plurality of hooks disposed on the mechanical box, an acquisition component, and a control component;
the acquisition component comprises a container data acquisition part and a sensor data acquisition part, the container data acquisition part is disposed on the mechanical box and configured to acquire a material picture of a container to be loaded or unloaded and send the material picture to the upper computer, and the sensor data acquisition part is disposed on the hook;
the control component is configured to receive and send information acquired by the acquisition component and control the hook of the mechanical box to operate.

9. The container train loading and unloading system according to claim 8, **characterized in that**
the container data acquisition part comprises a millimeter-wave radar and a camera device; the millimeter-wave radar and the camera device are disposed at a bottom of the mechanical box;
the millimeter-wave radar and the camera device are configured to acquire material data of the container to be loaded or unloaded;
the sensor data acquisition part comprises an angle sensor and a pressure sensor;
the angle sensor is disposed in the mechanical box and configured to monitor, in real time, an angle of the hook and an angle of the container to be loaded or unloaded and feed back the angles to the control component;
the pressure sensor is mounted on an action surface where the hook abuts against the container to be loaded or unloaded for acquiring pressure data in real time and feeding back the pressure data to the control component.

10. A container train loading and unloading method implemented by using the system according to any one of claims 1 to 9, **characterized in that** the method comprises:
controlling the spreaders of the row of bridge cranes to move to the container truck loading and unloading area and controlling the spreaders of the bridge cranes to hoist the containers, transfer the containers to the container stacking area, and lower the containers onto the container stacking area in a case that container trucks carrying containers are monitored to enter the container truck loading and unloading area;
controlling the overhead contact system translation mechanism to drive the overhead contact system to move to the lateral side of the container train in a case that the container train is monitored to enter the railway container loading and unloading area without load;
controlling the spreaders of the row of bridge cranes to move to the container stacking area;
controlling the spreaders of the bridge cranes to separately hoist the containers to the railway container loading and unloading area and lower the containers onto the standard container train; and
controlling the overhead contact system translation mechanism to drive the overhead contact system to an upper side of the standard container train, to drive the standard container train away from the railway container loading and unloading area.
